(19)

Europäisches
Patentamt
European
Patent Office
Office européen
des brevets

(11) **EP 2 675 099 A1**

(12) **EUROPEAN PATENT APPLICATION**

(43) Date of publication:
**18.12.2013 Bulletin 2013/51**

(51) Int Cl.:
*H04L 5/00* [(2006.01)]     *H04L 1/00* [(2006.01)]
*H04B 3/04* [(2006.01)]     *H04L 25/03* [(2006.01)]

(21) Application number: **12004385.6**

(22) Date of filing: **11.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Lantiq Deutschland GmbH**
**85579 Neubiberg (DE)**

(72) Inventors:
• **Strobel, Rainer**
  **80797 München (DE)**

• **Smaoui, Lilia**
  **80809 München (DE)**
• **Oksman, Vladimir**
  **Morganville, NJ 07751 (US)**

(74) Representative: **Fechner, Benjamin et al**
**Puschmann Borchert Bardehle**
**Postfach 10 12 31**
**80086 München (DE)**

(54) **Rate-adaptive dynamic spectrum management**

(57)     In an embodiment a method is to improve spectrum utilization in a communication system with a plurality of electronic communication connections. The method comprises each of a number of transmitters transmitting a signal to a number of receivers; conveying at least part of the power of each transmission to each of two or more receivers; and modifying the allocation of power of a transmission to the receivers such that the spectrum utilization is greater than if each receiver were to receive the same transmission power from each transmission from each transmitter. In an embodiment a distribution point is for use in a communication system. The distribution point comprises a first plurality of transmitters adapted for communication connection to a second plurality of receivers and a precoder configured to allocate transmission power of at least one of the transmitters to at least two of the receivers. The precoder is configured to allocate the transmission power for multipath signal transmission from the transmitter to the at least two receivers. In an embodiment a CPE device is for use in a communication system. The CPE device is adapted for communication connection with a first plurality of transmitters provided in a distribution point. The CPE device comprises a second plurality of receivers. The CPE device has a vector equalizer adapted to cancel crosstalk. A communication system comprises the distribution point and/or the CPE device and/or is adapted to perform the method to improve spectrum utilization.

FIG. 1

EP 2 675 099 A1

**Description**

Some of the disclosed embodiments relate to enhancing the performance of the relatively short distance from a communication backbone to a home, business, or other site including CPE ("customer premises equipment").

In many communication systems, there are physical links between a central office or other central location, and remote customer sites, such as a home, office, or other location including CPE. The physical link connecting the central location and remote locations may be wireline of any kind, or wireless of any kind. The provision of relatively new services, such as IPTV ("Internet protocol television") or cloud computing, requires increasing communication bandwidth from what is available in the prior art. There are significant costs associated with increasing the bandwidth to allow the new services. It is generally understood that the greatest portion of the costs, by far, are the costs associated with providing new physical links between a communication background (typically including a so-called "backbone") and the remote locations. In one formulation, this is called the "last mile" in a communication system, which may be an FTTH ("fiber to the home") system, although the term is not limited to fiber systems. Further, the phrase "last mile" is something of a misnomer, since the great majority of costs are associated with the connection between the remote locations and the backbone, which is typically on the order of a few meters up to perhaps as much as 250 meters, but is usually not anything close to a measurement of "one mile". Simply as a matter of convention in the art, the term "last mile" will be used here, although it is understood that the term refers to whatever the distance is between the backbone and remote locations, rather than an actual measure of one mile.

The prior art might be improved by an action that reduces or even eliminates the need to provide an additional new physical link for the last mile. In other words, the provision of means and methods to increase the bandwidth of existing infrastructure of physical media in the last mile, be they copper wire or wireless point to point or other, from current capacities to several hundred megabits per second, or even to 1Gb/s and beyond. In this way, massive investment in new physical links for the last mile will be  reduced, eliminated, and/or delayed, thereby reducing barriers to providing communication services.

The static operation of existing digital subscriber line technologies, such as VDSL, is not sufficient to provide the bandwidth required by the new services. The existing continuous adaptive schemes, such as SRA VDSL ("seamless rate adaptation VDSL") are not sufficiently flexible to adapt the system to changing data rate requirements of the subscribers.

One particular problem related to the provision of higher bandwidth has to do with the problem of crosstalk. Taking as one example an existing system with copper wires in the last mile, the connection between the communication backbone and the remote location is typically performed at a "distribution point" (also referenced herein as "DP"), which connects to the remote locations over last mile copper wires, and to a central office over fiberoptic cable. The communication bottleneck generally occurs in the copper wires of the last mile, and this bottleneck is exacerbated by crosstalk between different lines located in proximity within the last mile. The exemplary prior art system typically suffers from two kinds of crosstalk. One first kind is crosstalk is all within one distribution point. This kind of crosstalk can be cancelled relatively easily, because channel properties are known, and because channel signals are available. A second kind of crosstalk arises in two or more lines which are connected to different distribution points within the system. This second kind of crosstalk cannot be easily cancelled.

A similar problem exists for lines into CPE. In an exemplary system, multiple CPE devices may be connected to a distribution point with multiple twisted pairs of copper wire. In such a case, there are again two kinds of crosstalk. There is crosstalk between lines ending at the same CPE. Such crosstalk does not need to be canceled at the DP side, because it can also be canceled at the CPE side. A second kind of crosstalk exists for lines ending at two or more different CPE devices. This second kind of crosstalk can only be canceled at the DP side.

In prior art wireline systems, there are two main methods to mitigate crosstalk. One prior art method is referenced as "DSM level 2" ("dynamic spectrum management, level 2"), which is also called "DSM Level 2 Band Preference" or "DSM spectrum  optimization". The second prior art method is referenced as DSM level 3, and is also called "DSM Level 3 Vectoring", or "DSM crosstalk cancellation".

Most of the communication settings are static, meaning they do not change over time. The transmit spectrum is predefined by "PSD masks" ("power spectrum density masks"). A PSD mask is defined in three steps. First, a "limit PSD mask" is defined, which is a PSD mask that is defined by legal regulation and/or by a technical standard. The limit PSD mask must not be exceeded, and is not changed over time. Second, a method called "upstream power backoff" is used to mitigate crosstalk between different lines of a binder. Upstream power backoff is initiated during link activation, but cannot be changed while the link is active. Third, DSM level 2 is implemented. DSM Level 2 uses a method called SRA to provide dynamic adjustments of the PSDs in response to environmental noise. In essence, SRA allows dynamic changes of the data rate. SRA defines fine gains to change the transmit spectrum for each subcarrier in small steps.

In the method known as DSM level 3, the coefficients of a crosstalk canceller do not depend on the PSDs. Instead, diagonalizing precoders and equalizers are used, so that the performance of one line does not depend on the spectrum of the other lines. In this system, the influence of the crosstalk cancellation signal on a transmit PSD is negligible, and hence, spectrum adjustment with respect to crosstalk precoder coefficients and/or equalizer coefficients is not needed.

The wireline channel is assumed to be static over time and adaptive estimation methods, such as the least mean squares (LMS) algorithm, are used for channel estimation. Zero forcing precoders and equalizers show a significant performance loss as frequencies increase.

In wireless systems, in contrast to wireline systems, rapid environmental changes cause fast channel changes. Hence, channel knowledge is much less clear than in wireline systems, and hence, in wireless system, spectrum optimization based on a priori knowledge is limited. In wireless systems, bandwidth resource allocation among subscribers is performed mainly by scheduling algorithms which assign different priorities to different subscribers. Also, beamformers may be present in wireless systems. If they are, the coefficients of the beamformers are recalculated for every transmit symbol according to the current channel estimation and the actual received signal power. Calculation of the transmit power of each mobile device is typically performed by a central power control mechanism.

In an embodiment of a communication system, including wireline and/or wireless systems, unused bandwidth resources of one subscriber may be reallocated to other lines for efficient use of potential channel capacity. Herein, the term line is used though other words such as channel or link can also be used. A link may comprise a plurality of channels and/or lines. An effect can be to enhance the service of the other lines and thus increase the overall utilization of the last mile network. In an embodiment, bandwidth resources can be dynamically reallocated from links that do not require full bandwidth at a particular point in time to links that do require full or at least higher bandwidth at the same point in time.

Dynamically reallocating bandwidth may be done by time sharing in electronic communication. A time sharing system solves two problems which come up when one tries to do dynamic spectrum management to perform fast data rate changes.

1. Time-varying crosstalk noise. Changes in the transmit spectrum of one line change the crosstalk on the other lines. For this reason, DSM level 2 is not often used in practice.
2. Reconfiguration time. The system must be able to "know" when one of the subscribers does not need the full data rate. The system then reduces the rate of this unused or under-utilized link, in order to increase the data rates of other links. However, if a subscriber requests the full rate, that rate must be available after a relatively short reconfiguration time on the order of milliseconds.

The rate-adaptive dynamic spectrum management operates primarily on a system that is able to work with time-varying crosstalk and fast reconfiguration. Therefore, time sharing may be incorporated in some of the present embodiments.

Another way to look on this is to consider the time sharing system as an "outer optimization algorithm", which takes care of time-varying crosstalk, and which informs the rate-adaptive DSM distribution point when to transmit on which line, and when to receive on which line. The time sharing system also gives information about times when links are unused or do not need to be served with full bandwidth. Embodiments of rate-adaptive dynamic spectrum management are described as part of the embodiments of the current invention. However, using the "outer optimization algorithm" of a time sharing system can enhance the effects of embodiments using solely rate-adaptive dynamic spectrum management. Hence the combination of the rate -adaptive dynamic spectrum management, and the outer algorithm of a time sharing system, provides additional embodiments. The independent claims define the invention in various aspects. The dependent claims define embodiments of the invention in the various aspects.

In a first aspect the invention encompasses a method for use in a communication system. The system is to comprise a plurality of communication connections. The method comprises each of a number of transmitters transmitting a signal to a number of receivers, wherein the respective transmitter is adapted to convey transmit signal power to more than one receiver in the number of receivers. In an embodiment of the method according to the invention in the first aspect, the method comprises adapting the allocation of power of a transmission to the receivers for signal transmission to more than one receiver. In contrast with conventional methods, where the respective transmitter would be adapted, for example, by attempting crosstalk cancellation, to convey transmit signal power to only one receiver in the number of receivers, at least one effect of the method according to the invention in the first aspect can be improved spectrum utilization. Consequently, the embodiment can provide better spectrum utilization than in a case where each transmitter were only to use transmission power for signal transmission to only receiver and/or the receiver were to receive the same transmission power from each transmission from each transmitter.

In a variant of the first aspect, the invention encompasses a method for use in a communication system having a plurality of transmitters, a plurality of receivers and a plurality of communication connections, comprising each of a number of transmitters in the plurality of transmitters transmitting a signal to a number of receivers in the plurality of receivers, wherein the PSD for each transmission is any level up to full bandwidth; each receiver of the number of receivers signaling when that signaling receiver requires less than the full bandwidth; and the respective receiving transmitter adapting to transmit to that signaling receiver using less than the full bandwidth. In an embodiment the communication connections are provided as electronic communication connections. In an embodiment of the method according to the invention in the first aspect, the respective receiving transmitter further adapts to transmit to other receivers than the signaling receiver using the difference between full bandwidth and the bandwidth used for transmission to the signaling receiver. At least one effect of the method is to improve spectrum utilization.

In an embodiment of the method according to the invention in the first aspect the method further comprises modifying a PSD of the transmitters. In an embodiment, the method comprises notifying the transmitter that a particular receiver does not, at a particular time, require full bandwidth. In an embodiment the notified transmitters transmit less than full power to the receiver. Further, the transmitters to other receivers than the particular receiver transmit a difference between full bandwidth and the bandwidth transmitted to the particular receiver at the particular time. At least one effect in this embodiment is that the quality of signals transmitted by greater bandwidth and received by the other receivers is increased.

An embodiment of the method according to the invention in the first aspect comprises keeping in system memory the PSD for all transmitters prior to modification of the PSD. In an embodiment the method further comprises keeping in system memory the PSD for all transmitters after the modification of the PSD.

An embodiment of the method according to the invention in the first aspect comprises synchronously switching the transmitters from the modified PSD to the unmodified PSD, when system requirements change. At least one effect of a switch may be to increase spectrum utilization.

An embodiment of the method according to the invention in the first aspect comprises switching to a configuration that is more stable that the one PSD configuration of the transmitters. At least one effect may be maintaining system stability during the synchronous switching from one PSD configuration of the transmitters to another PSD configuration of the transmitters.

An embodiment of the method according to the invention in the first aspect comprises modifying a precoder configuration while the precoder is active. An embodiment further comprises modifying a PSD configuration while the precoder is active. In an embodiment the precoder configuration and the PSD configuration are  modified independently of one another. In an embodiment the precoder configuration is modified with an LMS algorithm and the PSD configuration is modified with an LMS algorithm.

An embodiment of the method according to the invention in the first aspect further comprises a transmitter receiving notification that an active equalizer configuration was reconfigured. In an embodiment reconfiguration of the active equalizer configuration is performed independent of anything related to a precoder configuration or PSD configuration. An embodiment comprises notifying the transmitter that the equalizer configuration was modified with an LMS algorithm.

In a second aspect the invention encompasses a method for communication in a system with a plurality of electronic communication connections. The method comprises each of a number of transmitters transmitting a signal to the same number of receivers, wherein each transmitter transmits approximately equal power to each receiver; using results of vector precoding and vector equalization to determine a subset of receivers to be disabled, such that the remaining number of receivers will be smaller than the number of transmitters; and reallocating transmission power previously used for transmission to the now disabled receivers so as to be used for transmission to the non-disabled receivers. In an embodiment all of the non-disabled receivers receive more transmission power than they had received prior to the disabling of a subset of the receivers. At least one effect of the method according to the invention in the second aspect is to enable an enhanced communication. In an embodiment of the method according to the invention in the second aspect, at least after the disabling of the subset of the receivers, a transmitter transmits part of the transmission signal over a crosstalk path. In an embodiment one of the non-disabled links is a weak link. In an embodiment an additional transmitter is added to system. At least one effect may be that per-line-PSD constraints can be relaxed. In an embodiment the method comprises notifying a distribution point that an additional receiver has been added. After such notification the number of transmitters equals or exceeds the modified number of receivers according to the notification. At least one effect can be that the transmitters transmit more transmission power to a weak link in the system.

In an embodiment of the method according to the invention in the second aspect an additional transmitter is added to system. At least one effect can be that per-line-PSD constraints can be relaxed. In an embodiment the method includes notifying a distribution point that an additional receiver has been added. After such notification the number of transmitters equals or exceeds the modified number of receivers according to the notification. At least one effect can be that the transmitters transmit more transmission power to a weak link in the system.

In an embodiment of the method according to the invention in the second aspect, the method includes notifying a distribution point that an additional receiver has been added. After such notification the number of transmitters equals or exceeds the modified number of receivers according to the notification. At least one effect can be that the transmitters transmit more transmission power to a weak link in the system. In an embodiment a transmitter transmits part of the transmission signal over a crosstalk path, one of the non-disabled links is a weak link and an additional transmitter is added to system. At least one effect can be that per-line-PSD constraints are relaxed.

In a third aspect the invention encompasses a method for changing a set of vectored lines in a communication system with a plurality of electronic communication connections. The method comprises updating transmission rate information; on the basis of the updated rate information, update transmission rate requirements; determining that transmission rate reconfiguration should take place; and changing the set of vectored lines in the communication system. At least one effect can be to meet alternating or otherwise updated transmission rate requirements.

In a fourth aspect the invention encompasses a method for use in a communication system with a plurality of communication connections, in particular electronic communication connections. The method comprises determining the number and nature of communication links in a communication system; and vectoring various aspects of at least one communication link. At least one effect of the method according to the invention in the fourth aspect is a reduction in complexity of vectoring. In an embodiment of the method according to the invention in the fourth aspect vectoring comprises vectoring some but not all of the communication links at any point in time. An embodiment of the method according to the invention in the fourth aspect comprises determining that transmission on a communication link disturbs the communication of other communication links in the system. An embodiment further comprises determining that a plurality of communication links disturb the communication of other communication links in the system. An embodiment further comprises at least one of electronically cancelling at least one communication link that disturbs the communication of other communication links in the system, and not electronically cancelling at least one communication link that disturbs the communication of other communication links in the system. An embodiment further comprises disabling at least one communication link that disturbs the communication of other communication links in the system, and serving the disabled link in a time slot that is different from one of the disturbed communication links in the system. An embodiment further comprises disabling at least one communication link that disturbs the communication of other communication links in the system and serving the disabled link in a time slot that is different from one of the disturbed communication links in the system.

An embodiment of the method according to the invention in the fourth aspect comprises partitioning a binder of vectored communication links into a plurality of groups of vectored communication links. In an embodiment each group is smaller than the number of links in the entire binder. At least one effect of such partitioning is that , the system memory requirements are reduced.

An embodiment of the method according to the invention in the fourth aspect comprises serving, at a particular time, only a subset of the vectored communication links and reconfiguring the PSD of transmitters in the system. At least one effect can be to enhance the communication performance of only the subset of vectored communication links being served at the time.

An embodiment of the method according to the invention in the fourth aspect comprises receivers providing results of matrix analysis based on equalizer coefficients to transmitters. At least one effect is that the results can be used as, or to provide for, precoder coefficients at the transmitters.

In a fifth aspect, the invention encompasses a method for initializing a communication system with a plurality of communication connections. In an embodiment the communication connections are provided as electronic communication connections. The method comprises line training; estimating channel characteristics; estimating rate requirements; allocating bandwidth to subscribers; optimizing system time sharing; initializing a precoder located in a distribution point, initializing an equalizer located at a CPE device, and adjusting spectrum requirements for a distribution point. In an embodiment, the line training comprises collecting data about signaling and system characteristics. In an embodiment, estimating rate requirements is performed by a central optimizer. In an embodiment, the central optimizer performs allocating bandwidth to subscribers. In an embodiment the central optimizer performs optimizing system time sharing. In an embodiment of the method according to the invention in the fifth aspect, the method includes starting transmission.

In a sixth aspect the invention encompasses a distribution point for use in a communication system. The distribution point comprises a first plurality of transmitters adapted for communication connection to a second plurality of receivers, and a precoder configured to allocate transmission power of at least one of the transmitters to at least two of the receivers. In an embodiment the precoder is configured to allocate the transmission power for multipath signal transmission from the transmitter to the at least two receivers. In an embodiment of the distribution point according to the invention in the sixth aspect, the distribution point is adapted for coupling the transmitter to the receivers via bonded communication connections. Further, the distribution point is adapted to take into account equalisation provided on the receiver side. At least one effect is that the distribution point, in allocating transmission power, can ignore constraints related to crosstalk between the bonded communication connections. In an embodiment of the distribution point according the invention in the sixth aspect, the CPE device is adapted to perform steps of a method according to the invention.

In a seventh aspect the invention encompasses a CPE device for use in a communication system. The CPE device is adapted for communication connection with a first plurality of transmitters provided in a distribution point. Further, the CPE device comprises a second plurality of receivers and a vector equalizer adapted to cancel crosstalk. In an embodiment of the CPE device according to the invention in the seventh aspect, the CPE device comprises at least two transmitters for transmission of data signals via at least two communication connections to at least two receivers, wherein the CPE device further comprises a precoder configured to allocate transmission power of at least one transmitter to the at least two receivers for multipath signal transmission from the at least one transmitter to the at least two receivers.

In an embodiment of the CPE device according the invention in the seventh aspect, the CPE device is adapted to perform steps of a method according to the invention.

In an eights aspect the invention encompasses a communication system with a plurality of communication connections. In an embodiment the communication connections are electronic communication connections. The system comprises a distribution point having components adapted to perform vector precoding and vector transmission PSD, a crosstalk channel, and a plurality of CPE devices having components adapted to perform vector equalization. In an embodiment a plurality of lines serving CPE devices are bonded. In an embodiment the system is configured to allow joint optimization of a DP precoder and a CPE equalizer, or of a DP equalizer and a CPE decoder. In an embodiment the distribution point is adapted to control some or all elements in the system. In an embodiment the distribution point is adapted to operate the system to maximize the communication capabilities for given system resources. In an embodiment given system resources are the lowest possible system resources. In an embodiment the system is configured to allow decomposing adaptation of the vector decoder and the vector equalizer by adaptive correction of the transmit spectrum with respect to the rate requirements. In an embodiment the distribution point is adapted to control the process of decomposing adaptation to maximize the communication capabilities with the lowest possible system resources.

In a variant, the invention in the eights aspect encompasses a system having plurality of communication connections. The system comprises a distribution point. The distribution point comprises a plurality of transmitters configured to transmit electronic communication. In an embodiment the communication is to be an electronic communication. The system comprises a plurality of receivers, each such receiver located at one of at least one CPE device. The system comprises at least one CPE device. The CPE device comprises one or more receivers configured to receive communication. In particular, the transmitters are configured to transmit the communication for reception by the receivers. The system comprises a crosstalk channel located between the distribution point and the at least one CPE device.

In an embodiment according to the invention in the eights aspect the CPE device is configured to receive transmission from a transmitter. Further, the CPE device is configured to convey the transmission to the receiver comprised in the CPE.

In an embodiment according to the invention in the eights aspect the system is adapted to perform steps of an embodiment of the method according to the invention.

At least one effect of the system according to the invention in the eights aspect can be that spectrum utilization is improved when compared with spectrum utilization in conventional systems.

Some embodiments described herein set forth a communication system that allows the dynamic reallocation of bandwidth resources among different CPE subscribers in an electronic communication system. New and improved algorithms operate on the system to reallocate bandwidth resources dynamically, from one or more subscribers who require less than full bandwidth at any particular point in time to one or more subscribers who requires more bandwidth at that point in time. An effect can be that system capacity is increased. Another effect can be that marginal rate of investment in the provision of new physical links in the last mile of the system for the extra system capacity is smaller than with conventional capacity expansion. Yet another effect may be to mitigate problems of crosstalk. In some embodiments, crosstalk is used affirmatively to increase the system capacity.

One embodiment is a method for enhancing communication in a system with a plurality of electronic communication connections. In this system, the number of active transmitters is greater than the number of active receivers. In this system, some transmitters transmit over crosstalk paths to enhance the signal to particular CPE devices serviced by these crosstalk paths. In this configuration of the system, an embodiment of a method according to the invention may operate primarily, although not exclusively on what is called the "downstream" or "downlink" path.

In other embodiments, the system is configured to operate primarily, although not exclusively, on what is called the "upstream" or "uplink" path. In some of these embodiments, some of the receivers are adapted to receive communication from the crosstalk paths. As an effect, signals from particular CPE devices may be enhanced. Although in the downlink path from a DP to CPE devices, overall power may be increased by the addition of transmitters at the DP side. In an embodiment, that, however, is not the case in the uplink path, where the CPE devices act as transmitters rather than receivers. In an embodiment, in the uplink path, the number of transmitters is not increased, because the number of CPE devices is given by the circumstances and thus predetermined. In a particular embodiment however, in the uplink path, additional receivers may be added at the DP side. An effect of the addition of receivers at the DP side, as occurs in some embodiments, can be to boost system gain, hence improving the signal interference noise ratio (SINR) and enhancing communication quality.

One embodiment is a method for enhancing communication in a system with a plurality of electronic communication connections. In this system, PSDs are dynamically modified such that CPE devices needing less than full bandwidth will have reduced signal quality, while CPE devices needing greater or full bandwidth will have higher signal quality.

One embodiment is a method for enhancing communication in a system with a plurality of electronic communication connections. In this system, data for groups of lines, constituting less than all lines serviced by the system, are processed, and bandwidth is reallocated for this sub-set of all system lines.

One embodiment is a method for enhancing communication in a system with a plurality of electronic communication connections. Data about the dynamically changing bandwidth requirements of different CPE devices is collected and processed at a distribution point. On the basis of the processed results, the distribution point dynamically reallocates bandwidth among the various CPE devices services by that distribution point.

One embodiment is a communication system with a plurality of electronic communication connections. The system is configured to perform joint optimization of precoders and equalizers for multiple CPE devices in a bonded CPE environment. In some embodiments, the system is configured to perform joint optimization is performed for precoders and equalizers at one or more distribution points. In some embodiments, the system is configured to perform joint optimization is performed for precoders and equalizers at one or more CPE devices. In some embodiments, the system is configured to perform joint optimization for precoders and equalizers at one or more distribution points and also for one or more precoders and one or more CPE devices.

In an embodiment of the system according to the invention in the eights aspect the transmitters are configured to vary the level of power in transmissions between full bandwidth and less than full bandwidth. In an embodiment the CPE is configured to signal when a receiver requires less than full bandwidth. In an embodiment the signal is to provide information related to bandwidth. In an embodiment the signal is to provide information on bandwidth required by such receiver. In an embodiment the distribution point is configured to receive a signal indicative of a receiver requiring less than full bandwidth. In an embodiment the signal is from the CPE. In an embodiment of the system according to the invention in the eights aspect the transmitter is adapted to transmit at less than full bandwidth to the receiver that requires less than full bandwidth.

In an embodiment of the system according to the invention in the eights aspect the transmitter is adapted to transmit using the difference between full bandwidth and the bandwidth used for transmission to the receiver that requires less than full bandwidth for transmission to other receiver(s) than the receiver requiring less than full bandwidth.

In an embodiment of the system according to the invention in the eights aspect the distribution point comprises a front portion and a back portion separated by the precoder. The front portion is to be interfaced to the communication connection. The distribution point is configured to control the back portion independently from the front portion. At least one effect can be that for a given number of data signals processed in the back portion, wherein each data signal is provided for reception by an associated receiver, a number of transmitters in the distribution point that is larger than the number of data signals can be used for signal transmission.

In an embodiment of the system according to the invention in the eights aspect the distribution point is provided according to the invention in the seventh aspect. In an embodiment of the system according to the invention in the ninth aspect the CPE device is provided according to the invention in the eights aspect. In an embodiment of the system according to the invention in the ninth aspect the system is adapted to perform steps of the method according to the invention in any the first through sixth aspect. Various embodiments are not restricted or constrained by the physical channel on which data is conveyed. Therefore, various embodiments are cable, while other embodiments are wireline telephone or other wireline communication, and other embodiments are wireless.

Various embodiments are not restricted or constrained by the manner in which a system or owned or operated. Therefore, various embodiments may be entirely owned and operated by a single entity. In some embodiments, a system is entirely privately owned. In some embodiments, a system is entirely publicly owned, in the sense that the equipment is owned by one party which offers services to one or more other parties. In some embodiments, the system involves a split of ownership or operation, in which, for example, a central office and distribution points are owned and operated by one party, whereas CPE devices are owned and operated by one or more other parties.

Any combination of features or elements of embodiments according to the invention in the various aspects, i.e. including combinations across the various aspects and embodiments, that is technically possible is also disclosed herein also unless explicitly stated otherwise.

## BRIEF DESCRIPTION OF THE DRAWINGS

The embodiments are herein described, by way of example only, with reference to the accompanying drawings. No attempt is made to show structural details of the embodiments in more detail than is necessary for a fundamental understanding of the embodiments. In the drawings:

FIG. 1 illustrates one embodiment of a multi-user communication system;
FIG. 2 illustrates a flow diagram describing one embodiment of a method for provisioning data transmission in a communication system;
FIG. 3 illustrates a flow diagram describing one embodiment of a method for optimizing transmission parameters in a communication system;
FIG. 4 illustrates one embodiment of part of a multi-user communication system that enables communication between a distribution point and a CPE device;

FIG. 5 illustrates a flow diagram describing one embodiment of a method for communicating between a distribution point and a CPE device;

FIG. 6A illustrates one embodiment of part of a multi-user communication system between a distribution point and a CPE device;

FIG. 6B illustrates one embodiment of a system that modifies the system illustrated in

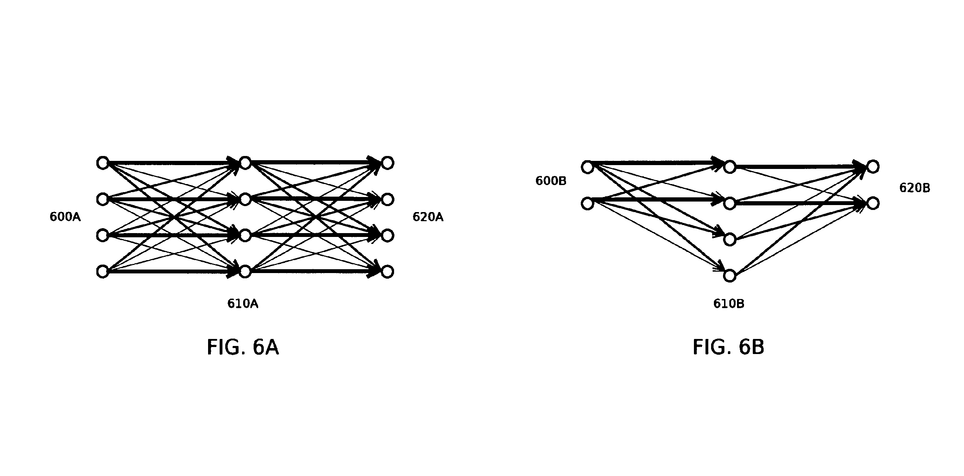

FIG. 6A, in that all power is allocated to less than the full number of receivers;

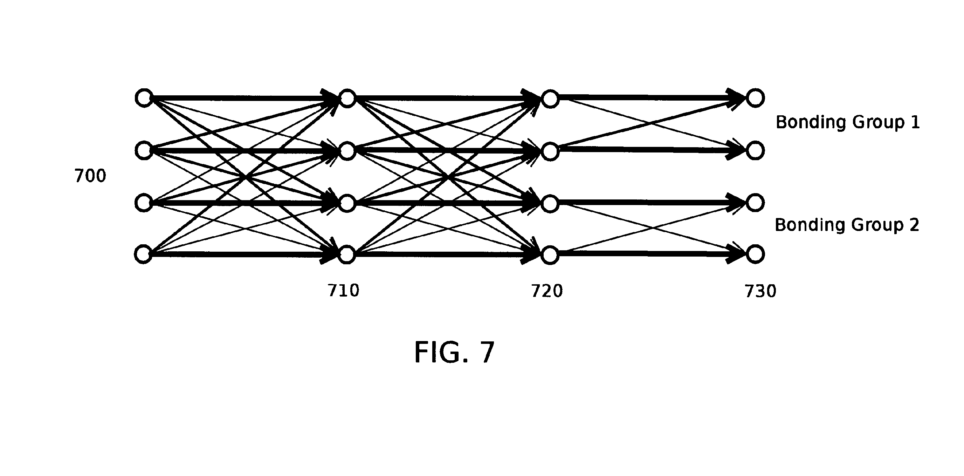

FIG. 7 illustrates one embodiment of a system that allocates transmission power of multiple transmitters to a number of bonding groups less than the number of transmitters.

## DETAILED DESCRIPTION

In this description, the following symbols have the indicated meanings:

Symbols

| $\hat{u}$ | Receive signal vector |
|---|---|
| F | Diagonal Matrix of eigenvalues of the channel matrix |
| Y | Diagonal Matrix of eigenvalues of the transmit covariance matrix |
| $C_n$ | Noise covariance matrix |
| $C_x$ | Transmit covariance matrix |
| G | Vector equalizer matrix |
| $G_{mse}$ | Vector equalizer matrix for minimum mean squared error equalizer |
| $G_{zf}$ | Vector equalizer matrix for zero forcing equalizer |
| n | Noise vector |
| P | Vector precoder matrix |
| $P_{mse}$ | Vector precoder matrix for minimum mean squared error precoder |
| $P_{ti}$ | Precoder matrix for configuration $ti$ |
| $P_{zf}$ | Vector precoder matrix for zero forcing precoder |
| u | Transmit signal vector |
| V | Matrix of eigenvectors of the channel matrix |
| $\mu$ | Step size for the LMS update algorithm |
| $\mu'$ | Waterfilling level for waterfilling algorithm |
| $f_i$ | The ith eigenvalue of the channel matrix |
| $y_i$ | The ith eigenvalue of the transmit covariance matrix |
| $E_{tx}$ | Transmit signal power budget |
| $f_{sym}$ | Symbol frequency |
| L | Number of lines of the binder |
| $L_r$ | Number of active receivers, equal to number of data transmissions |
| $L_t$ | Number of active transmitters |
| $N_{mac}$ | Number of multiply-accumulate operations per second |
| $p_{max}$ | Per subcarrier transmit power limit |

In this description, the following abbreviations have the indicated meanings:

Abbreviations

| AFE | Analog Frontend |
|---|---|
| CPE | Customer premises equipment. Communication devices located at a subscriber site. Computer hardware devices, such as personal computers or local servers serving a particular site, are examples of CPE devices. Wireless units conducting wireless communication for transmission, reception, or both, are other examples. Wireline units conducting wireline communication for transmission, or reception, or both, are other examples. Such wireline units may be communicatively connected to the communication backbone by copper wires, cable, or other physical media. |
| DFE | Digital Frontend |
| DP | Distribution Point |
| DSM | Dynamic Spectrum Management |

DSM Level 2 A type of DSM, also called "DSM Level 2 Band Preference", or "DSM spectrum optimization"

FTTdp Fiber to the distribution point

FTTH Fiber to the home. This is a more generic term than FTTdp.

IPTV Internet protocol television

LMS Least mean squares

MIMO Multiple Input Multiple Output

MMSE Minimum mean squared error

ONU Optical network unit

PSD Power spectral density

SINR Signal interference noise ratio. This is sometimes referenced as "SNR", which is short for "Signal Noise Ratio", except that SINR is used here to clear that the noise may be environmental noise as is typical in SNR, transmission channel noise (as say, for example, thermal noise caused by the power amplifier), another data transmission or interference, or other noise.

SRA Seamless Rate Adaptation, a form of VDSL.

TDMA Time Division Multiple Access

In this description, the following terms have the indicated meanings:

"Bonding" is a method in which multiple DSL connections, typically copper lines, are communicatively connected in order to provide incremental bandwidth for highspeed connections, typically but not necessarily Ethernet connections. Similarly, a "bonding system" is a system in which multiple DSL connections have been connected, or "bonded".

"Full bandwidth". In a system with r number of receivers, a case were each receiver receives the same transmission power at a particular time is a case in which each receiver receives "full bandwidth" at that time. For example each of four transmitters transmits a watt of power at one time, and two receivers are receiving such transmissions at that time, then each receiver is receiving "full bandwidth" if, at that point in time, it is receiving two watts. In contrast, if at that time the first receiver were receiving 1.5 watts, and the second receiver were receiving 0.5 watt, then the first receiver would be receiving more than "full bandwidth" at that time, whereas the second receiver would be receiving less than "full bandwidth" at that time.

"Last mile" is the final leg of a communication system from a communication central office to a customer or subscriber. Typically, the distance from the system backbone to the CPE device. It is also sometimes called the "last kilometer". In many systems, and certainly for the majority of customers, the "last mile" is actually much shorter than a mile, and is typically on the order of up 250 meters. However, in some cases, particularly non-urban areas, the final leg can actually be more than a mile. In this description, the intention is to the final leg of a communication system, that is, the distance from the system backbone to the CPE device. No specific geographic measurement is intended.

"PSD configuration". In a system with two or more transmitters, the characteristics of transmission power of the various transmitters at a particular time are the "PDS configuration" of the system at that time. A PDS configuration will tell each transmitter its transmission power of various messages at a particular time.

"Spectrum utilization" is the usage at a particular time of the available transmit power in a system. At a particular time, one receiver may have a greater need for spectrum than a second receiver, or according to some priority rule, at such time the first receiver may have a higher right to spectrum than the second receiver. At such time, spectrum utilization is said to be "improved", or spectrum is said to be "optimized", if more transmission power is allocated to the first receiver than to the second receiver, according to needs and priority rules at the particular time.

"Wireline communication" includes communication by cable, by a pair or greater number of telephony lines bound together, or by any other communication that includes communication by cable or wire. A "wireline" is a line that is cable, wireline telephony, or any other kind of wired structure for communication. A "wireline communication" or "wireline connection" is the path by which wireline communication occurs.

"Wireless communication" includes communication by wireless, which may be terrestrial or satellite, cellular or land mobile, microwave or sub-microwave, or any other kind of wireless communication. A "wireless communication" or "wireless connection" is the path by which wireless communication occurs.

"Hybrid communication system" is a system that includes at least one wireline connection between two or more wireline communication units, and also at least one wireless connection between two or more wireless communication units. The description herein includes, in various embodiments, systems that are hybrid communication systems.

"Weak link" is a communication link that is part of a group of links, wherein the weak link is considered to have relatively poorer reception than at least some of the other links. In technical terms, the SINR for the weak link is relatively lower than the SINR than at least some of the other links in the group. The weakness of the weak link may be due to the fact that it this link is relatively longer than the other links, or relatively older than the other links, or relatively more degraded than the other links, or relatively more subject to environmental interference than the other links, or for some other reason that makes the weak link relatively weaker than at least some of the other links in the group or links.

"Relaxing a constraint" is a way of increasing power, hence bandwidth, in a particular link. Constraints are typically caused by either legal regulation, such as per line maximum transmission power transmitted, or by a technical requirement, such as the inability to raise power without causing unwanted side effects.

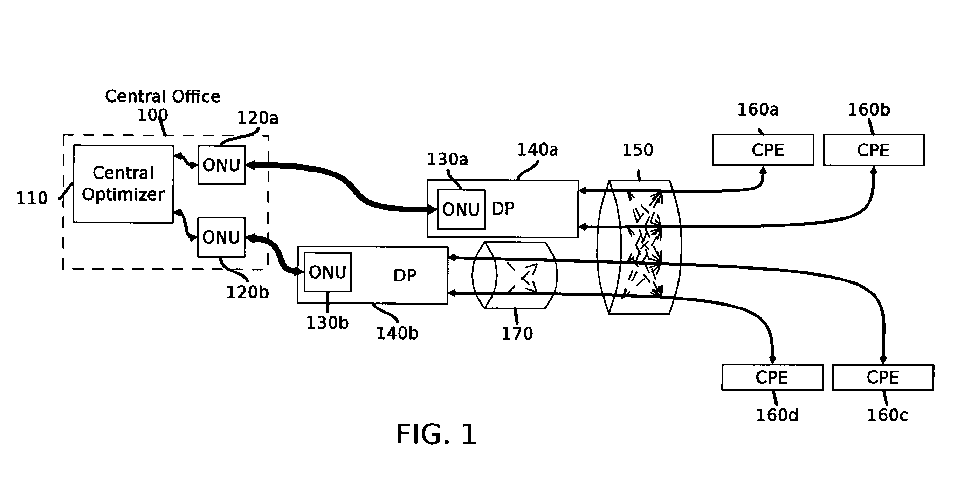

FIG. 1 illustrates one embodiment of a multi-user communication system. There is a central office 100, comprising a central optimizer 110 and one or more optical network units 120A and 120B. The central optimizer 110 optimizes communication between the central office 100 and downstream components of the system. The ONU units 120A and 120B in the central office 100 are in direct communication, over an optical connection that is typically a fiberoptic cable, with both the central optimizer 110 and downstream ONU units 130A and 130B, gain over optical connection that is typically a fiberoptic cable. Downstream communication from the central office 110 may flow in multiple paths. According to one path, communication flows from the central office 110, to an ONU 120A, to a downstream ONU 130A, where 130A is part of a distribution point 140A, that is connection through a crosstalk channel 150 with CPE equipment 160A and 160B. The link between the DP 140A and the CPE equipment 160A and 160B may be wireline or wireless, but is typically, although not exclusively, copper wire. Upstream communication travels in exactly the opposite path, from CPE equipment 160A and 160B through crosstalk channel 150, to DP 140A, to ONU 130A, over typically fiberoptic cable to ONU 120A, and finally to the central optimizer 110 in the central office 100.

According to a second communication path, communication flows from the central office 110, to an ONU 120B, to a downstream ONU 130B, where 1130B is part of a distribution point 140B, that is connection through a crosstalk channel 170 serving lines only from that particular DP 140B. Communication then flows from crosstalk channel 170 to the crosstalk channel 150 serving multiple distribution points, then to CPE equipment 160C and 160D. The link between the DP 140B and crosstalk channel 170 may be wireline or wireless, but is typically, although not exclusively, copper wire. The link between crosstalk channel 170 and the CPE equipment 160C and 160D may be wireline or wireless, but is typically, although not exclusively, copper wire. Upstream communication travels in exactly the opposite path, from CPE equipment 160C and 160D through crosstalk channel 150, to crosstalk channel 170, to DP 140B, to ONU 130B, over typically fiberoptic cable to ONU 120B, and finally to the central optimizer 110 in the central office 100.

These are not the only possible communication system structures. Another non-limiting example of such a structure would be only the first communication path, where one crosstalk channel services all the lines. Hence, the system would be comprised of 100, 110, 120A, 130A, 140A, 150, and 160A and 160B. Another non-limiting example of a such a structure would be where there is no crosstalk channel for a single DP, hence, exactly structure shown in FIG. 1, except without crosstalk channel 125.

As shown in FIG. 1, some embodiments show access network topology consisting of small distribution points (DPs) which are connected to a backbone via fiberoptic cable (also referenced as fiber to the distribution point "FTTdp"). Each distribution point serves a fixed number of subscribers, such as 8 or 16 subscribers, over the last mile between the DP and customer premises, typically, although not exclusively, over copper wires.

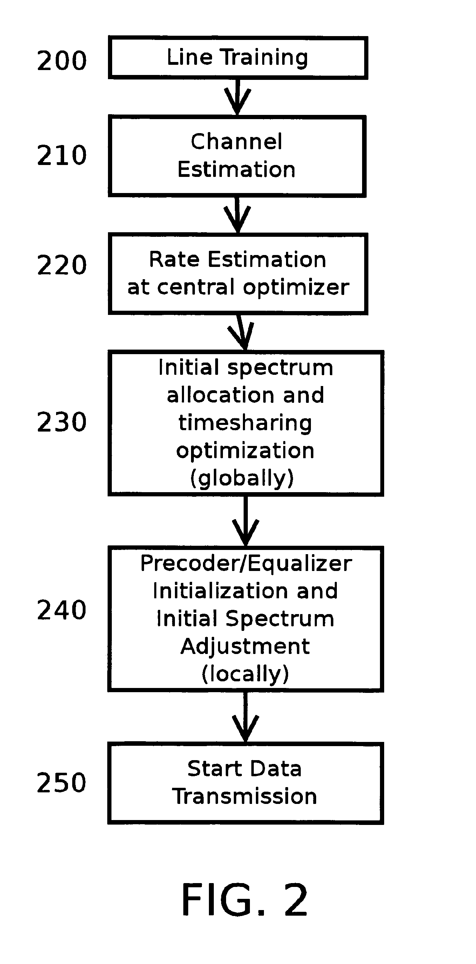

An in-place system will perform system initialization to prepare for communication. As shown in FIG. 2, there will be line training 200, in which data is collected about signaling and system characteristics. On the basis of such data, channel estimation 210 is performed. Rate estimation 220 is then performed, typically by the central optimizer 110. Initial spectrum is allocated to various subscribers, and timesharing optimization is planned 230, using the outer optimization algorithm. Spectrum allocation and timesharing optimization 230 is considered to be "global", in that it refers to all the CPE devices, rather than devices for any particular DP. Precoder and equalization initialization, and initial spectrum adjustment, 240, is then performed for each of the lines served by a particular DP. Step 240 is considered "local" in that it is done for each DP, and for the lines within each DP, rather than across DPs. The system is then ready to start data transmission 250.

In various embodiments, both systems and methods, described herein, dynamic resource allocation is provided by an algorithm which calculates the local settings for signal precoding, equalization and spectrum management, within the distribution points. In some of these various embodiments, the outer optimization algorithm is also applied to enhance the effectiveness of the system and method.

Some embodiments describes various systems and methods to implement bandwidth resource reallocation on distribution points, where MIMO processing is available. In various of these embodiments, the outer optimization algorithm may also be applied.

Some embodiments show calculating precoder and equalizer coefficients for a predefined selection of transmitters, receivers and corresponding transmission lines, which has been selected from the outer optimization algorithm. In various of these embodiments, the outer optimization algorithm may also be applied.

Some embodiments show the joint optimization of transmit spectrum and MIMO signal processing. In various of these embodiments, the outer optimization algorithm may also be applied.

Subscriber bandwidth rate requirements change very frequently. Different subscribers have different bandwidth demands and different changes over time. If some subscribers, hence some communication lines, do not require the full bandwidth at a particular point in time, then the capacity from these lines could be used to enhance the performance of the lines which require higher bandwidth at the same point in time. First, through fast optimization methods are needed. To implement the fast data rate changes, a fast linear optimization algorithm for fast data rate changes is used. Second, various embodiments described here perform joint optimization of crosstalk canceller coefficients, and of transmit spectrum, with respect to the current rate requirements. These embodiments require methods to find locally optimal configurations of the transmission settings. Various embodiments described here suggest methods to search the locally optimal configurations for communication systems, particularly wireline communication systems, although wireless and hybrid systems can also benefit from these embodiments. Such methods are performed, in large part although not exclusively, at distribution points. Various embodiments take account the computational and power consumption limitations of the distribution points.

In various embodiments, the distribution points measure the received noise for upstream traffic, and requests downstream noise information from the CPE devices. In wireline transmission systems, the channel noise characteristics are assumed to be almost constant over time. Channel and noise characteristics are estimated during training. Transmit powers and transmit timing are calculated within the central optimizer. Additional parameters, such as coefficients of precoders and equalizers, and fine adjustment of the transmit PSD, are calculated locally within the distribution points based on the channel estimation.

Based on the calculated coefficients and other local settings, the resulting rates are communicated by the distribution points to the central optimizer which runs the time sharing optimization. To follow slow time variance of external noise and channel characteristics, the coefficients are updated every time the given configuration is enabled.

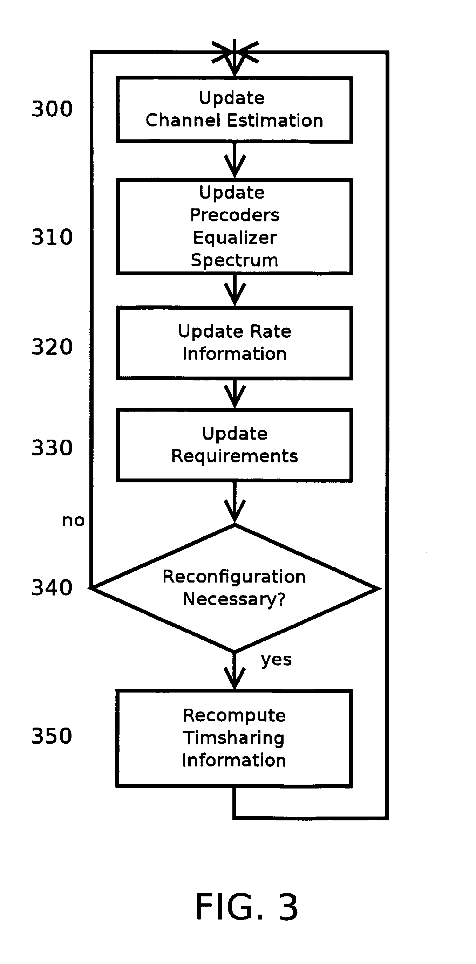

FIG. 3 illustrates a flow diagram describing one embodiment of a method for optimizing transmission parameters in a communication system. After a communication has been provisioned by initialization, the system must be periodically updated to optimize transmission parameters on ongoing basis. In some embodiments, the system is updated every time a new configuration is enabled. FIG. 3 illustrates reconfiguration of transmit parameters during active data transmission. The channel estimation is updated 300 on the basis of information gather during active transmission. Precoders, equalizers, and transmit spectrum (transmit power), are then updated 310. Transmission rate information is then updated 320. On the basis of the new information about achievable rates, and the update of data rate requirements from the subscribers 33 0, the answer is determined to the question, "Is reconfiguration necessary?" 340. If the answer is no, reconfiguration is not performed, and the system waits for the next update round. If the answer is yes, timesharing information is recomputed 350, after which the system waits for the next round.

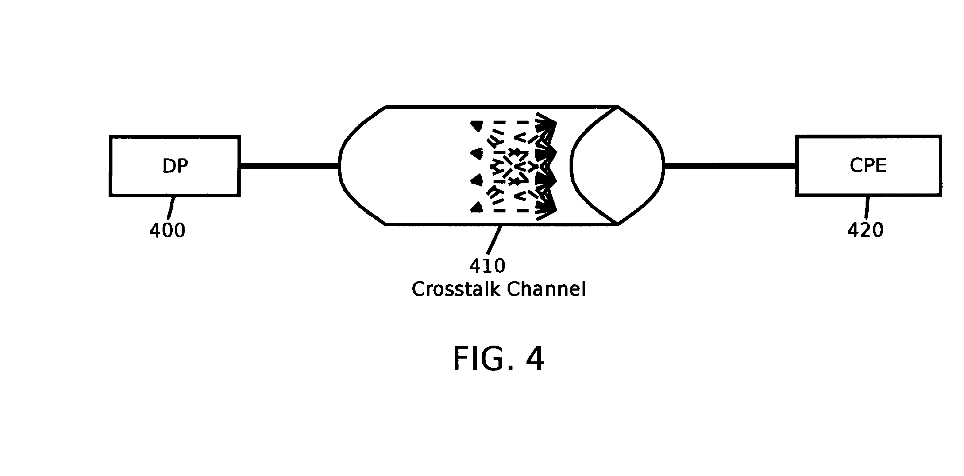

FIG. 4 illustrates one embodiment of part of a multi-user communication system that enables communication between a distribution point and a CPE device. Distribution point 400 prepares a signal vector for transmission. The distribution point 400 creates a matrix, as described more fully below, and implements algorithms, also as more fully described below, to implement precoding, equalization, and/or transmit spectrum optimization of communication between the DP and the CPE devices. In an embodiment PSD shaping may be performed. This information is transmitted by the DP 300 to the crosstalk channel 410, which conveys the information an equalizer 420 located in each CPE device.

The structure in FIG. 4 has been explained in the context of a transmission flowing from a distribution point to a CPE device. This is typically called the "downlink" or "downstream" path. The same structure is used in the opposite direction, in what is called the "uplink" or "upstream" path. That is communication could also flow from the CPE device to the DP.

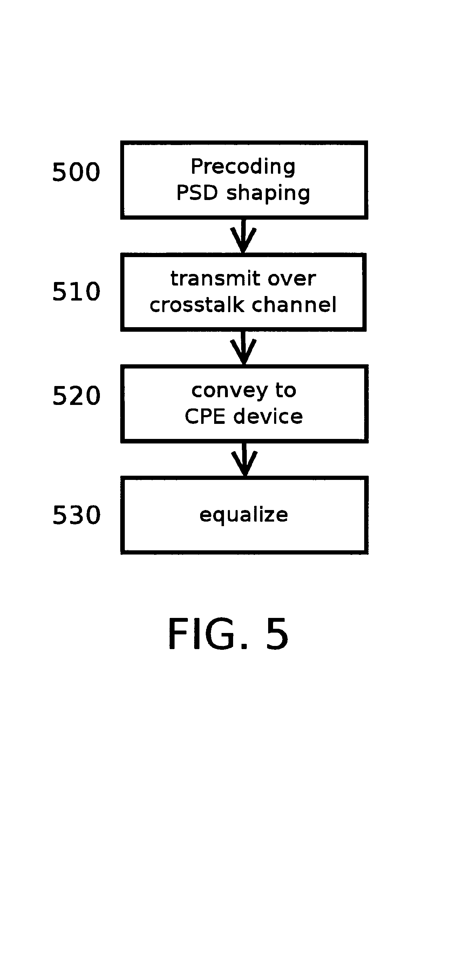

The method of implementing of implementing local optimization is corollary to the structure shown in FIG. 4. One embodiment of such a method is shown in FIG. 5. In FIG. 5, information about dynamic PSD shaping is precoded 500 at a distribution point. This information is transmitted 510 from the DP to a crosstalk channel. The information is then conveyed 520 by the crosstalk channel to each CPE device, where the information is equalized 530 by an equalizer within the CPE device.

Again, FIG. 5 shows a method with a downstream path, but the method could be reversed, with an upstream path, with dynamic PSD shaping in the CPE, equalization at the DP, and the message flowing from the CPE device to the crosstalk channel to the DP.

As one non-limiting example of the downstream path, consider a MIMO transmission channel, described by a channel matrix (or multiple channel matrices in case of a multicarrier system), with a channel matrix H, a precoder matrix P and an equalizer matrix G. The receive signal vector is calculated by the equation:

$$\mathbf{\hat{u}} = \mathbf{G} \cdot (\mathbf{H} \cdot \mathbf{P} \cdot \mathbf{u} + \mathbf{n})$$

An optimization algorithm chooses the number of active transmitters $L_t$, and the number of served receivers $L_r$. In a general case for downstream, the equalizer matrix G  has size $L_r$ x $L_r$, the channel matrix H has size $L_r$ x $L_t$ and the precoder matrix P has size $L_t$ x $L_r$. In upstream direction, the precoder matrix is of size $L_t$ x $L_t$, the channel matrix is

of size $L_r$ x $L_t$ and the equalizer matrix is of size $L_t$ x $L_r$.

The channel matrix for a specific subset of active transmitters and receivers is created from the full channel matrix by selecting the rows of the full matrix which correspond to the active receiving lines and selecting the columns of the full matrix which correspond to the active transmitting lines.

As one non-limiting example, consider the case of serving a CPE on lines 2 and 5 via transmitters 1, 2, 5 and 8, of a 8-pair binder. The results are shown in the two equations below. In these equations, **P**$ds$ is the downstream vector precoder matrix, **H**$ds$ is the downstream channel matrix, **G**$ds$ is the downstream vector equalizer matrix down, **P**$us$ is the upstream vector precoder matrix, **H**$us$ is the upstream channel matrix, and **G**$us$ is the upstream vector equalizer matrix down.

$$\mathbf{P}_{ds} = \begin{bmatrix} p_{12} & p_{15} \\ p_{22} & p_{25} \\ p_{52} & p_{55} \\ p_{82} & p_{85} \end{bmatrix} \quad \mathbf{H}_{ds} = \begin{bmatrix} h_{21} & h_{22} & h_{25} & h_{28} \\ h_{51} & h_{52} & h_{55} & h_{58} \end{bmatrix} \quad \mathbf{G}_{ds} = \begin{bmatrix} g_{22} & 0 \\ 0 & g_{55} \end{bmatrix}$$

$$\mathbf{P}_{us} = \begin{bmatrix} p_{22} & 0 \\ 0 & p_{55} \end{bmatrix} \quad \mathbf{H}_{us} = \begin{bmatrix} h_{12} & h_{15} \\ h_{22} & h_{25} \\ h_{52} & h_{55} \\ h_{82} & h_{85} \end{bmatrix} \quad \mathbf{G}_{us} = \begin{bmatrix} g_{21} & g_{22} & g_{25} & g_{28} \\ g_{51} & g_{52} & g_{55} & g_{58} \end{bmatrix}$$

Due to the system topology, there are restrictions on the precoder and the equalizer matrices. In downstream, only the precoder matrix elements which describe couplings within one DP are unequal zero and only the equalizer elements which describe couplings within the same CPE are unequal zero. In upstream, the equalizer matrix elements of couplings within one DP are unequal zero and precoder elements within the same CPE are unequal zero.

Depending on the channel characteristics, a diagonalizing precoder or equalizer may be suboptimal due to noise effects. Alternative approaches are the optimal coefficients with respect to the minimum mean squared error, the MMSE filter, or nonlinear precoders and equalizers. For transmit spectrum optimization, algorithms such as waterfilling, iterative waterfilling, or spectrum balancing algorithms, may be applied.

Increasingly, wired communication systems work and will work at relatively high frequencies, over relatively short distances (say 100 meters, although this may vary up or down) of a copper cable binder. A single distribution point serves only a small number of twisted pairs of the binder. At high frequencies, the crosstalk couplings between the twisted pairs are significantly higher than in existing ADSL and VDSL systems.

The crosstalk coupling paths are in some cases of equal strength or stronger than the direct path over the twisted pair cable. As a result, the part of the transmit signal power which is lost to the other lines because of crosstalk coupling is not negligible. In many case, multiple lines cannot be served independently at the same time at high bandwidth, because of the strong interference between the lines.

Therefore, either orthogonal access schemes such as TDMA, and/or MIMO signal processing, may be required to use phone lines for high frequency transmission.

Traditionally, there are two limits for the transmit power for signal transmission over phone lines. One limit is the maximum transmit power of the line drivers. With increasing bandwidth, the efficiency of the line drivers, and therefore the available transmit signal power, decreases. The second limit on maximum transmit power over phone lines comes from legal regulation, and is defined by transmit PSD masks which define a maximum transmit spectrum. The PSD masks define a hard upper limit which must not be exceeded at any time on any line or at any frequency.

If MIMO precoding is used, then this constraint must be satisfied on the signals which are transmitted on the lines. The spectrum management algorithm defines the spectrum at the input of the precoder such that the rate requirements are fulfilled, but the algorithm also takes into account the constraints on the transmit spectrum at the output of the precoder.

Due to residual crosstalk noise caused by imperfect crosstalk cancellation, and due to need to respect the transmit spectrum and transmit power constraints, it is beneficial to reduce the transmit power on links which do not require the full bandwidth. Such reduction may reduce crosstalk in other lines, or allow other lines to use higher signal power, or both. Transmit power may also be reduced to save power.

Two problems must be solved to implement a transmission scheme, which is able to change the transmit spectrum frequently. First, fast changes in the transmit spectrum cause non-stationary interference in the binder, which may cause transmission errors. Secondly, recalculation of the MIMO precoder and equalizer coefficients is required for the system to benefit from the reduced transmit power.

The problem of non-stationary noise is solved using a transmission scheme in which all transceivers switch synchronously between pairs of different predefined configurations. Then, the noise conditions on the line are non-stationary, changing with the configuration switches, but for every single configuration, the noise environment is virtually stationary.

At the first training stage of initialization of a DP, or upon the joining of a new line, the channel characteristics are estimated and transmitted to the central optimizer. The central optimizer estimates the achievable rates and identifies configurations of interest.

In the next training phase, the physical transmission parameters of the configurations of interest, which have been selected by the time sharing optimization, are identified. When the configuration includes multiple active transmissions, an iterative optimization of the transmit spectrum and precoder and equalizer coefficients is required.

The general iterative waterfilling algorithm works as follows:

The first step is to calculate the eigenvalue decomposition of the MIMO channels.

$$\mathbf{V\Phi V}^H = \mathbf{H}^H \mathbf{C}_n^{-1} \mathbf{H}$$

$$\mathbf{\Phi} = \mathrm{diag}(\phi_1, ..., \phi_L)$$

The channel matrix **H** for channel *i* in downstream is defined according to the equation **H***ds i* below, and in the upstream according to the equation for **H***us i* below. The standard case that every subscriber is served from a single line. This definition gives one nonzero eigenvalue per tone and per line. The waterfilling step is then performed for all eigenvalues corresponding to one subscriber. Waterfilling is applied to the group of eigenvalues, for which the sum power constraint is valid. For the wireline channel, this is done for all tones of the multicarrier system which correspond to the same transceiver.

$$\mathbf{H}_{ds\,i} = \begin{bmatrix} h_{1i} \\ h_{2i} \\ h_{3i} \\ h_{4i} \end{bmatrix}$$

$$\mathbf{H}_{us\,i} = \begin{bmatrix} h_{i1} & h_{i2} & h_{i3} & h_{i4} \end{bmatrix}$$

Then the eigenvectors of interest are identified in the waterfilling step.

$$\psi_i = \max\left(0, \mu' - \frac{1}{\phi_i}\right)$$

$$\mu' = \frac{1}{K}\left(E_{tx} + \sum_{i=1}^{K} \frac{1}{\phi_i}\right)$$

An extended waterfilling algorithm is required to take into account the maximum transmit spectrum and the maximum required SINR which is required for the maximum bitloading. Therefore, an upper bound power $p_{max}$ is introduced, which is the minimum of PSD and the required power for the maximum bitloading.

To simplify notation, the eigenvalues $\phi_i$ are assumed to be sorted in ascending order. They are then grouped into three groups. For the channels $i = 1, ..., l$, $\mu' - \frac{1}{\phi_i} \leq 0$ holds. For the channels $i = l + 1, ..., k$, $0 \leq \mu' - \frac{1}{\phi_i} \leq p_{max}$ holds. For the third group, the channels are $i = k + 1, ..., L$ where $\mu' - \frac{1}{\phi_i} > p_{max\,i}$.

$$\psi_i = \begin{cases} 0 \text{ for } i = 1, ..., l \\ \mu' - \dfrac{1}{\phi_i} \text{ for } i = l + 1, ..., k \\ p_{max\,i} \text{ for } i = k + 1, ..., L \end{cases}$$

$$\mu' = \frac{1}{k - l}\left( E_{tx} + \sum_{i=l+1}^{k} \frac{1}{\phi_i} - \sum_{i=k+1}^{L} p_{max\,i} \right)$$

This step requires multiple recalculations, until both conditions above are fulfilled.

The last step is to recalculate the transmit covariance matrix $C_x$.

$$\mathbf{C}_x = \mathbf{V}\text{diag}(\psi_1, ... \psi_L)\mathbf{V}^H$$

The transmit power scaling matrix is calculated according to the following equation.

$$\sqrt{\mathbf{C}_x} = \mathbf{V}\text{diag}(\sqrt{\psi_1}, ... \sqrt{\psi_L})$$

In the case of multiple independent connections, this is done per connection in an iterative process. The waterfilling algorithm is then repeated multiple times for every connection while the current noise and interference conditions, which are contained in the noise covariance matrix $C_n$, change in very iteration step.

For the standard case where the connection lines are independent, that is to say, one line per CPE, the transmit covariance matrices are diagonal. Then the values of $\frac{1}{\phi_i}$ according to equation above for the eigenvalues of the channel matrix, correspond to the received noise plus interference power on line $i$. The transmit signal shaping is done by transmitting with power $\psi_i$ according to the equation above for $\psi_i$ on line $i$.

The waterfilling spectrum optimization converges to the sum rate optimal points. It can be extended to a weighted sum-rate optimization. Then, an additional primal reconstruction step is used to calculate the final power allocation based on multiple iterations.

For fairness optimization, that is, to maximize the lowest data transmission rate, the algorithm requires additional coordination. The achieved rates are communicated to the central optimizer and the central optimizer calculates a sum power for each link and communicates this back to the distribution points. The algorithm calculates the average rate, increases the sum power of all links where the data rate is lower than the average data rate, and decreases the sum power of all links where the link rate is higher than the average data rate.

FIG. 6A illustrates one embodiment of part of a multi-user communication system between a distribution point and a CPE device. In FIG. 6A, there are four transmitters on the left side 600A, which generate four signals 610A, which arrive at four receivers 620A. In essence, FIG. 6A illustrates four active channels with an identity between the number of transmitters and the number of receivers.

FIG. 6B illustrates one embodiment of a system that modifies the system illustrated in FIG. 6A, in that all power is allocated to less than the full number of receivers. In FIG. 6B, there are two transmitters on the left side 600B, which generate four signals 610B, which arrive at two receivers 620B. In essence, FIG. 6B illustrates two active channels with an identity between the number of transmitters and the number of receivers, but the power to each receiver has been doubled from that shown in FIG. 6A, because each receiver in FIG. 6B each transmission at double the power of the transmissions shown in FIG. 6A.

A transmission link may be weak. For example, a relatively long line in a bundle of shorter lines, will tend to have weaker reception than the shorter lines. In such a case, it may be necessary or advisable to serve this weaker line in a time slot during which the other lines do not transmit, and thus to avoid interference from the relatively stronger lines. In this case, the precoder can be used to enhance the signal at the receiver of the weak line, by sending the accordingly precoded signal over the unused transmitter.

As an example, assume a number $L_r$ of active receivers, which means that the transmit and receive data vectors u and û have size $L_r$ x 1. On the physical channel, $L_t \geq L_r$ signals are used to create the data stream. The downstream precoder matrix therefore has the size $L_r$ x $L_t$. This method enhances the channel capacity, particularly but not exclusively at higher frequencies, and therefore increases the capacity of weak lines (such as relatively longer lines) due to the higher overall transmit power used to transmit the data for each receiver.

The necessary precoder and equalizer matrices for zero forcing and MMSE optimization are given in the following equations. To take into account the transmit power constraints, the scale factor s has been added to the precoder equations. The scale factor is chosen such that all transmit power constraints are fulfilled. The spectrum optimization is considered by the matrix $\sqrt{\mathbf{C}}_x$.

$$\mathbf{P}_{zf} = s \cdot \mathbf{H}^H \cdot (\mathbf{H}\mathbf{H}^H)^{-1} \cdot \sqrt{\mathbf{C}}_x$$

$$\mathbf{P}_{mse} = s \cdot \mathbf{H}^H \cdot (\mathbf{H}\mathbf{H}^H + \frac{p_{noise}}{p_{tx}} \cdot \mathbf{I})^{-1} \cdot \sqrt{\mathbf{C}}_x$$

$$\mathbf{G}_{zf} = (\mathbf{H}^H\mathbf{H})^{-1} \cdot \mathbf{H}^H$$

$$\mathbf{G}_{mse} = (\mathbf{H}^H\mathbf{H} + \frac{p_{noise}}{p_{tx}} \cdot \mathbf{I})^{-1} \cdot \mathbf{H}^H$$

$$s = \sqrt{\frac{1}{\max(\text{diag}(\mathbf{P}\mathbf{P}^H))}}$$

The final precoder matrix contains three parts.

- The scale factor s

- The crosstalk cancelation part

- The transmit spectrum Cx

The crosstalk cancelation part is calculated first. The transmit spectrum is calculated such that the rate requirements are fulfilled. The scale factor is chosen such that the PSD limit and the transmit power limit are fulfilled. In an embodiment, the scale factor may be calculated using an adaptive algorithm.

In some hardware embodiments, the three parts of the precoder matrix can be multiplied to create a single precoder matrix. In other embodiments, the three parts may remain independent.

If there are three hardware components, more memory and more multiplications will be required, and update algorithms may become more complex.

CPE devices do not need any changes, if power reallocation on inactive links is applied at DP side, because there is still one data stream destined for one CPE and the signal is precoded such that the interference is mitigated in the CPE receive signal. A CPE device experiences a higher receive signal level and thus a higher SINR compared to the standard case. With this precoding and equalization method, it is possible to serve relatively weaker lines with rates higher that the single line rate, and thus to guarantee quality of service also on the weaker lines. It has been assumed here that a "weaker" line is a relatively longer line, but there may be other reasons, or interference or heavy demand or due to other factors, why a line would be considered relatively "weak", and could thus benefit by this method.

An example of an implementation is a system serving two lines, where lines 1 and 2 do not achieve the required data rate in a fully vectored case. The system can then use two canceller settings Pt1, corresponding to figure 3A1, and Pt2 corresponding to figure 3B, with the ratio between times $t_1$ and $t_2$ which is needed to meet the performance requirements. The precoder matrices use the coefficients as shown in the equation immediately below for the 4 x 4 and the 4 x 2 configurations.

$$\mathbf{P}_{t1} = \begin{bmatrix} p_{11} & p_{12} & p_{13} & p_{14} \\ p_{21} & p_{22} & p_{23} & p_{24} \\ p_{31} & p_{32} & p_{33} & p_{34} \\ p_{41} & p_{42} & p_{43} & p_{44} \end{bmatrix} \quad \mathbf{P}_{t2} = \begin{bmatrix} p_{11} & p_{12} & 0 & 0 \\ p_{21} & p_{22} & 0 & 0 \\ p_{31} & p_{32} & 0 & 0 \\ p_{41} & p_{42} & 0 & 0 \end{bmatrix}$$

Depending on the optimization weights used for a weighted sum-rate or fairness optimization, it is possible to create different spectrum allocations for the same configuration of active transmitters and active receivers.

For cases where the some links are requesting data rates which are lower their guaranteed minimum but still nonzero, there is a power allocation which achieves the necessary rates on this links and allows additional transmit power on the fully activated links.

It is necessary to use different configurations with all links active, but with different power allocations, in order to achieve the optimal configurations for cases with weak crosstalk or crosstalk cancellation operating close to the theoretical optimum.

FIG. 7 illustrates one embodiment of a system that allocates transmission power of multiple transmitters to a number of bonding groups less than the number of transmitters. In FIG. 7, 700 shows four active transmitters, each transmitter transmitting a signal. 710 shows four signals transmitted by the transmitters. 720 is four active receivers, each receiver receiving a signal from each of the four transmitters. 730 shows two bonding groups, Bonding Group 1 which includes two receivers, and Bonding Group 2 which includes two other receivers.

In a bonding system, multiple transmission lines serve a single CPE device. In such a system, and additional vector equalizer for downstream and a vector precoder for upstream can be integrated into the CPE. For this setup, the precoder coefficients are calculated differently, because the interference between the lines of the same CPE is partially cancelled at the receive side.

The equalizer matrices are then given by the following equations for zero-forcing or MMSE optimization.

$$\mathbf{G}_{zf} = ((\mathbf{HP})^H (\mathbf{HP}))^{-1} \cdot (\mathbf{HP})^H$$

$$\mathbf{G}_{mse} = ((\mathbf{HP})^H (\mathbf{HP}) + \frac{p_{noise}}{p_{tx}} \cdot \mathbf{I})^{-1} \cdot (\mathbf{HP})^H$$

This method has an important impact on the transmit PSD optimization. Since crosstalk between lines of one CPE does not need to be canceled by precoding at the DP side, the optimal transmit PSD is no longer defined by a diagonal matrix and allows crosstalk between lines of the same bonding CPE group

For example, for a system with four lines where lines 1 and 2 end at CPE 1 and lines 3 and 4 at CPE 2, the precoder and equalizer matrices can be extended as shown in the two equations immediately below. In the two equations, **P**$ds$ is the downstream vector precoder matrix, **G**$ds$ is the downstream vector equalizer matrix, **P**$us$ is the upstream vector precoder matrix, and **G**$us$ is the upstream vector equalizer matrix.

$$\mathbf{P}_{ds} = \begin{bmatrix} p_{11} & p_{12} & p_{13} & p_{14} \\ p_{21} & p_{22} & p_{23} & p_{24} \\ p_{31} & p_{32} & p_{33} & p_{34} \\ p_{41} & p_{42} & p_{43} & p_{44} \end{bmatrix} \quad \mathbf{G}_{ds} = \begin{bmatrix} g_{11} & g_{12} & 0 & 0 \\ g_{21} & g_{22} & 0 & 0 \\ 0 & 0 & g_{33} & g_{34} \\ 0 & 0 & g_{43} & g_{44} \end{bmatrix}$$

$$\mathbf{P}_{us} = \begin{bmatrix} p_{11} & p_{12} & 0 & 0 \\ p_{21} & p_{22} & 0 & 0 \\ 0 & 0 & p_{33} & p_{34} \\ 0 & 0 & p_{43} & p_{44} \end{bmatrix} \quad \mathbf{G}_{us} = \begin{bmatrix} g_{11} & g_{12} & g_{13} & g_{14} \\ g_{21} & g_{22} & g_{23} & g_{24} \\ g_{31} & g_{32} & g_{33} & g_{34} \\ g_{41} & g_{42} & g_{43} & g_{44} \end{bmatrix}$$

Vectoring may not be possible over all lines of the binder. This may be the case when there is interference between lines ending at different distribution points with an insufficient interface between them. This may also be the case if the computational resources to do precoding and equalization over all lines of one distribution point are not available or are simply insufficient.

Complexity of vectoring precoding and equalization increases quadratically with the number of active lines. To reduce the required compute and memory resources, partial crosstalk cancellation may be implemented. This approach forces some of the precoder and equalizer coefficients to zero and thus reduces the required memory and compute operations.

It is possible to use partial crosstalk cancellation for high frequency wired communication. However, due to the small vectoring group size, and also due to the high frequencies, zeroing some coefficients will result in some performance degradation, potentially significant degradation.

Some embodiments may counteract this performance degradation. A large vector group of L lines may be separated into two or more smaller vector groups served in separate time slots. For each of the smaller groups, crosstalk may be canceled. Applying partial crosstalk cancellation to smaller groups separated by time slots will reduce both computational complexity and memory consumption. For example, assume that one vector group of lines L is separated into two smaller vector groups of equal size, that is, each group of half size $L/2$. The two smaller groups will be served in different time slots, which will reduce computational complexity be a factor of 4 and reduce memory consumption by a factor of 2. Power consumption is also reduced because only half of the line drivers are enabled at the same time and the vectoring computation consumes less power. For each of the smaller groups, the crosstalk is fully canceled, while crosstalk between the groups does not exist when they were served in different time slots. This method may also be used for multiple distribution points in the same cable binder.

Furthermore, there is the option to serve both groups of $L/2$ receivers with all L transmitters. For this case, the memory consumption is equal to the full vector group, but the number of compute operations is reduced by factor 2. By applying the method shown in FIG. 6A and 6B, the signal-to-noise ratios of the active links can be higher compared to the case where all links are active.

However, in various implementations of the partial crosstalk cancellation discussed above various system constraints must be considered. These constraints include computation resources, memory resources, signaling bandwidth, and power consumption.

To deal with the limited computation resources, it must be guaranteed that the number of required MAC (multiply-accumulate) operations does not exceed the available maximum in any time slot. The power reallocation may still be applied in the system. The maximum number of required MAC operations is then given by equation immediately below.

$$N_{mac} = \max_{configurations\,ti} L_{t\,ti} \cdot L_{r\,ti} \cdot N \cdot f_{sym}$$

The second constraint to be dealt with is limited memory resources. The sum of required coefficients over all active configurations is the limiting factor related to memory resources. Therefore, to deal with the limitation of memory resources, it is beneficial to reuse coefficients in multiple configurations. At first glance, this might seem to be a contradiction of the method illustrated in FIG. 6A and FIG. 6B. However, the apparently contradiction may be resolved with a special method of coefficient calculation, as shown in the two equations immediately below.

$$\mathbf{P}_{zf} = s \cdot \mathbf{H}^{-1} \cdot \sqrt{\mathbf{C}_x}$$

$$\mathbf{G}_{zf} = \mathbf{H}^{-1}$$

This resolution requires square channel matrices. The channel matrices are chosen to be of size $L_t \times L_t$ for $L_r < L_t$. Then, it is no longer required to store separate coefficient sets for every configuration. All configurations for which the transmitting lines are a subset of the lines of one of the inverted sub-matrix can share the same coefficients, as indicated in the following equation.

$$N_{coeffs} = \sum_{submatrices\, i} L_{ti}^2 \cdot N$$

For example, assume a system which consists of 8 lines with 2048 subcarriers. Such a system would require 8.8.2048 = 131072 complex coefficients. If the lines are separated into two groups of four lines, e. g., group I with lines 1 to 4 and group 2 with lines 5 to 8, then the coefficients can be used for all configurations where either some arbitrary selection of lines of group 1 is active or some arbitrary selection of lines of group 2 is active. The number of required coefficients is 2·(4·4·2048) = 65536.

The output signal scaling s and the transmit PSDs, defined by the transmit covariance matrix $C_x$ are still different for every configuration.

The third constraint to be dealt with is limited signaling bandwidth. The signaling bandwidth required to precode/ equalize one line is proportional to the number of disturber lines which are active at the same time. To reduce signaling bandwidth, the number of lines which are active at the same time can be limited to a number $L_t$ < L. This reduces the required bandwidth bw, as shown by the equation immediately below.

$$bw \sim \max_{configurations\, ti}(L_t - 1) \cdot f_{sym} \cdot N$$

The fourth constraint to be dealt with is power consumption. Power consumption is an important hardware constraint for distribution points, especially when remote power feeding is used. The components consuming the most power are the digital front end (DFE), the analog front end (AFE) and the line drivers.

The power consumption of the DFE is related to the size of the precoder and equalizer matrices and therefore proportional to the average matrix size $L_t$ x $L_r$.
The power consumption of the analog frontend is proportional to the number of active links $L_t$. Therefore, to save power in the AFE, the method of illustrated in FIG. 6A and  FIG. 6B may be applied with the full capability of transceivers (both transmitters and receivers), or may be applied with a reduced number of additional transceivers, or may not be applied at all. There is great flexibility in the implementation of this method, and hence there many possible embodiments involving the method, or not applying the method according to circumstances.

The line drivers' power consumption does not depend only on the number of active transmitters, but also on the transmit power. Therefore, minimizing transmit power is an additional criterion for spectrum optimization, which will be applied in some embodiments.

Crosstalk cancellation between or among multiple distribution points will not be feasible in some cases, because of the high amount of data that must be exchanged in real time in order to implement crosstalk cancellation. If crosstalk cancelation is applied between or among multiple distribution points, then the available bandwidth between the distribution points is limited and some or all of the methods described to deal with the four system constraints should be implemented in order to reduce the required bandwidth.

Joint spectrum optimization is also possible for multiple distribution points when it is not possible to exchange real-time signals. The only requirement is that the distribution points be synchronized.

The uncanceled crosstalk from the other distribution points connections is considered as noise and therefore also requires adjustment of the canceller coefficients.

For implementation purposes, the optimization procedure for training, and the procedure for reconfiguration during active data transmission, are different. The initial optimization is based on the channel estimation data. In contrast, optimization for reconfiguration occurs during active data transmission, so the optimization is done based on the actual noise measurement and the achieved transmission rates. Furthermore, dynamic rate requirements are only known from active links, and so are calculated during reconfiguration but not during initialization. FIG. 2 and FIG. 3 show initialization and update, respectively.

Channel characteristics change relatively frequently in wireless systems. Hence, channel estimation and update, as shown in FIG. 3, are performed relatively frequently  in wireless systems, even up to as frequently, in some cases, as for every transmitted frame. In contrast to wireless communication, in wireline communication the channel changes slowly over time. Therefore, in wireline systems, instead of repeating the channel estimation as frequently as every frame, the existing estimation is corrected by update algorithms to adapt to slow variances of the channel.

One algorithm which is often used in wired communication systems is the LMS algorithm. This is a well known algorithm in which estimations are repeated, and measured, converging iteratively to the least mean squared error minimum. There is a residual error which depends on the step size, but with small step size, high precision is achieved, meaning that signal quality is optimized.

In one implementation of LMS, the coefficients for precoding and equalization are stored with limited number of bits. Therefore there is a lower limit on the step size, which is one bit. If the step size were too high, the residual coefficient noise would reduce the system performance, and at some point the update would become unstable and starts to diverge. Therefore, ill-conditioned channels may require a large number of coefficient bits to run an LMS algorithm. Consequently, running an LMS algorithm may be impractical, due to slow convergence and high memory requirements.

The update rules for the given system are given by the two equations immediately below, in which $\mu$ is the LMS step size.

$$\mathbf{P}^{[t+1]} = \mathbf{P}^{[t]} + \mu_P \cdot \mathbf{e} \cdot \mathbf{x}^H$$

$$\mathbf{G}^{[t+1]} = \mathbf{G}^{[t]} + \mu_G \cdot \mathbf{e} \cdot \mathbf{y}^H$$

These two equations also work for cases in which the precoder and equalizer matrices are non-square matrices. For square or diagonal precoders and equalizers, as used in prior art systems, different update rules are used.

If precoder and equalizer are present in the system and both are adapted, it is required to decouple the updates to guarantee system stability.

In the given setup, it is proposed to do the decomposition by independent adaption of the precoder output scaling factor s.

$$s^{[t+1]} = s^{[t]} + \mu_s \cdot (1 - \max(\text{diag}(\mathbf{PP}^H)))$$

This guarantees that the precoder output complies with the PSD constraint in any case when the precoder input signals comply with the PSDs, and this also keeps the relative scaling between the transmit powers of different lines.

The spectrum optimization is then defined by the independent third component of the precoder matrix which is the transmit covariance matrix $\sqrt{\mathbf{C}_x}$. The transmit spectrum is adapted independently with respect to the data rate requirements.

Certain features of the embodiments/cases, which may have been, for clarity, described in the context of separate embodiments/cases, may also be provided in various combinations in a single embodiment/case. Conversely, various features of the embodiments/cases, which may have been, for brevity, described in the context of a single embodiment/case, may also be provided separately or in any suitable subcombination. The embodiments/cases are not limited in their applications to the details of the order or sequence of steps of operation of methods, or to details of implementation of devices, set in the description, drawings, or examples. In addition, individual blocks illustrated in the figures may be functional in nature and do not necessarily correspond to discrete hardware elements. While the methods disclosed herein have been described and shown with reference to particular steps performed in a particular order, it is understood that these steps may be combined, sub-divided, or reordered to form an equivalent method without departing from the teachings of the embodiments/cases. Accordingly, unless specifically indicated herein, the order and grouping of the steps is not a limitation of the embodiments/cases. Embodiments/cases described in conjunction with specific examples are presented by way of example, and not limitation. Moreover, it is evident that many alternatives, modifications and variations will be apparent to those skilled in the art. Accordingly, it is intended to embrace all such alternatives, modifications and variations that fall within the spirit and scope of the appended claims and their equivalents.

## Claims

1. A method for improving spectrum utilization in a communication system with a plurality of electronic communication connections, comprising:

   each of a number of transmitters transmitting a signal to a number of receivers;
   conveying at least part of the power of each transmission to each of two or more receivers; and

modifying the allocation of power of a transmission to the receivers such that the spectrum utilization is greater than if each receiver were to receive the same transmission power from each transmission from each transmitter.

2. The method of claim 1, further comprising:

modifying the PSD of the transmitters wherein a transmitter is notified that a receiver does not at a particular time require full bandwidth, the transmitters transmit less than full power to the receiver, the transmitters transmit to other receivers the difference between full bandwidth and the bandwidth transmitted to said receiver at the particular time, and the quality of signals to be received will be increased by greater bandwidth transmitted or decreased by lesser bandwidth transmitted.

3. The method of claim 2, further comprising:

keeping in system memory the PSD for all transmitters prior to modification of the PSD, and also keeping in system memory the PSD for all transmitters after the modification of the PSD.

4. The method of claim 3, further comprising:

synchronously switching the transmitters from the modified PSD to the unmodified PSD, when system requirements change such that a switch will increase the spectrum utilization.

5. The method of claim 4, further comprising:

maintaining system stability during the synchronous switching from one PSD configuration of the transmitters to another PSD configuration of the transmitters, by switching only to a configuration that is more stable that the one PSD configuration of the transmitters.

6. The method of any of claims I to 5, further comprising:

modifying a precoder configuration while the precoder is active; and
modifying a PSD configuration while the precoder is active;
whereas the precoder configuration and the PSD configuration are modified independently of one another.

7. The method of claim 6, wherein precoder configuration is modified with an LMS algorithm and the PSD configuration is modified with an LMS algorithm.

8. The method of any of claims 1 to 7, further comprising;
a transmitter receiving notification that an active equalizer configuration was reconfigured independent of anything related to a precoder configuration or PSD configuration.

9. The method of claim 8, wherein the transmitter is notified that the equalizer configuration was modified with an LMS algorithm.

10. A distribution point for use in a communication system, the distribution point comprising a first plurality of transmitters adapted for communication connection to a second plurality of receivers, and a precoder configured to allocate transmission power of at least one of the transmitters to at least two of the receivers,
**characterized in that** the precoder is configured to allocate the transmission power for multipath signal transmission from the transmitter to the at least two receivers.

11. The distribution point of claim 10, **characterized in that** the distribution point is adapted for coupling the transmitter to the receivers via bonded communication connections, and wherein the distribution point is further adapted to take into account equalisation provided on the receiver side.

12. The distribution point of any of claims 10 and 11, **characterized by** a front portion and a back portion separated by the precoder, wherein the front portion is to be interfaced to the communication connection, and wherein the distribution point is configured to control the back portion independently from the front portion. At least one effect is that for a given number of data signals processed in the back portion, wherein each data signal is provided for reception by an associated receiver, a larger number of transmitters in the distribution point than the number of data signals can be used for signal transmission.

13. A CPE device for use in a communication system, the CPE device adapted for communication connection with a first plurality of transmitters provided in a distribution point, the CPE device comprising a second plurality of receivers, **characterized by** a vector equalizer adapted to cancel crosstalk.

14. A communication system with a plurality of electronic communication connections, comprising:

a distribution point, comprising components that perform vector precoding and vector transmission PSD;
a crosstalk channel;
a plurality of CPE devices, comprising components that perform vector equalization;
in which a plurality of lines serving CPE devices are bonded;
in which the system is configured to allow joint optimization of a DP precoder and a CPE equalizer, or of a DP equalizer and a CPE decoder; and
in which the distribution point controls all elements in the system, and operates the system to maximize the communication capabilities with the lowest possible system resources.

15. The system of claim 14, **characterized by** at least one of: the distribution point being provided according to one of claims 10 to 12, at least one of the CPE devices being provided according to claim 13, and the system being adapted to perform the method according to any of claims 1 to 9.

FIG. 1

EP 2 675 099 A1

200    Line Training

210    Channel Estimation

220    Rate Estimation at central optimizer

230    Initial spectrum allocation and timesharing optimization (globally)

240    Precoder/Equalizer Initialization and Initial Spectrum Adjustment (locally)

250    Start Data Transmission

FIG. 2

300 — Update Channel Estimation

310 — Update Precoders Equalizer Spectrum

320 — Update Rate Information

330 — Update Requirements

no

340 — Reconfiguration Necessary?

yes

350 — Recompute Timsharing Information

# FIG. 3

FIG. 4

| 500 | Precoding<br>PSD shaping |
|---|---|

| 510 | transmit over<br>crosstalk channel |
|---|---|

| 520 | convey to<br>CPE device |
|---|---|

| 530 | equalize |
|---|---|

# FIG. 5

600A    610A    620A

FIG. 6A

600B    610B    620B

FIG. 6B

FIG. 7

Europäisches
Patentamt

European
Patent Office

Office européen
des brevets

**EUROPEAN SEARCH REPORT**

Application Number

EP 12 00 4385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | WO 2008/088912 A1 (IKANOS COMMUNICATIONS INC [US]; HEIDARI SAM [US]; SCHELSTRAETE SIGURD) 24 July 2008 (2008-07-24)<br>* figures 1, 2, 3, 6 *<br>* page 7 *<br>* page 15 *<br>----- | 1-4<br><br><br>5 | INV.<br>H04L5/00<br>H04L1/00<br>H04B3/04<br>H04L25/03 |
| | | | TECHNICAL FIELDS SEARCHED (IPC) |
| | | | H04L<br>H04B |

The present search report has been drawn up for all claims

| Place of search | Date of completion of the search | Examiner |
|---|---|---|
| Munich | 28 February 2013 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 00 4385

The Search Division considers that the present European patent application does not comply with the requirements of unity of invention and relates to several inventions or groups of inventions, namely:

1. claims: 1-5

   maintaining system stability during the synchronous switching from one PSD configuration of the transmitters to another PSD configuration of the transmitters by switching only to a configuration that is more stable that the one PSD configuration of the transmitters

   ---

2. claims: 6, 7

   modifying a precoder configuration while the precoder is active; and modifying a PSD configuration while the precoder is active; whereas the precoder configuration and the PSD configuration are modified independently of one another

   ---

3. claims: 8, 9

   a transmitter receiving notification that an active equalizer configuration was reconfigured independent of anything related to a precoder configuration or PSD configuration

   ---

4. claims: 10-12

   a precoder configured to allocate transmission power of at least one of the transmitters to at least two of the receivers, characterized in that the precoder is configured to allocate the transmission power for multipath signal transmission from the transmitter to the at least two receivers

   ---

5. claims: 13-15

   A CPE device for use in a communication system, the CPE device adapted for communication connection with a first plurality of transmitters provided in a distribution point, the CPE device comprising a second plurality of receivers, characterized by a vector equalizer adapted to cancel crosstalk

   ---

**ANNEX TO THE EUROPEAN SEARCH REPORT
ON EUROPEAN PATENT APPLICATION NO.**                    EP 12 00 4385

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2013

| Patent document cited in search report | Publication date | Patent family member(s) | Publication date |
|---|---|---|---|
| WO 2008088912 A1 | 24-07-2008 | EP 2127332 A1<br>US 2008170609 A1<br>WO 2008088912 A1 | 02-12-2009<br>17-07-2008<br>24-07-2008 |

For more details about this annex : see Official Journal of the European Patent Office, No. 12/82